# EUROPEAN PATENT APPLICATION

(11) **EP 4 779 316 A1**
(43) Date of publication of application: **22.07.2026**
(21) Application number: 24865120.0
(22) Date of filing: 05.08.2024
(51) Int. Cl.: G01N 35/02, G01N 35/04

(54) **AUTOMATIC ANALYSIS DEVICE AND AUTOMATIC ANALYSIS METHOD**

(30) Priority: 12.09.2023 JP 2023147728
(71) Applicant: HITACHI HIGH-TECH CORPORATION, Tokyo 105-6409 (JP)
(72) Inventor: SASAKI Airi, Tokyo 105-6409 (JP); MORI Takamichi, Tokyo 105-6409 (JP); TAKAHASHI Kenichi, Tokyo 105-6409 (JP)
(74) Representative: MERH-IP Matias Erny Reichl Hoffmann Patentanwälte PartG mbB
(86) International application number: PCT/JP2024/027975
(87) International publication number: WO 2025/057614

(57) **Abstract**

An object of the present invention is to provide an automatic analyzer capable of shortening a measurement time when a sample is whole blood. The automatic analyzer of the present invention includes: a reaction disk which is rotated and stopped once per cycle; a sample dispensing mechanism configured to dispense a sample into reaction containers arranged on the reaction disk; and a control unit, and the control unit is configured to control the dispensing of the sample to be performed every two cycles when the sample is blood cells, and control the dispensing of the sample to be performed every cycle when the sample is whole blood. Alternatively, the automatic analyzer of the present invention includes: a reaction disk which is rotated and stopped once per cycle; a sample dispensing mechanism configured to dispense a sample into reaction containers arranged on the reaction disk; and a control unit, and the control unit is configured to control the dispensing of the sample to be performed every two cycles when the sample is blood cells, and control the dispensing of the sample to be performed every cycle if a predetermined condition is satisfied, and control the dispensing of the sample to be performed every two cycles if the predetermined condition is not satisfied, when the sample is whole blood.

## Description

### Technical Field

The present invention relates to an automatic analyzer and an automatic analysis method.

### Background Art

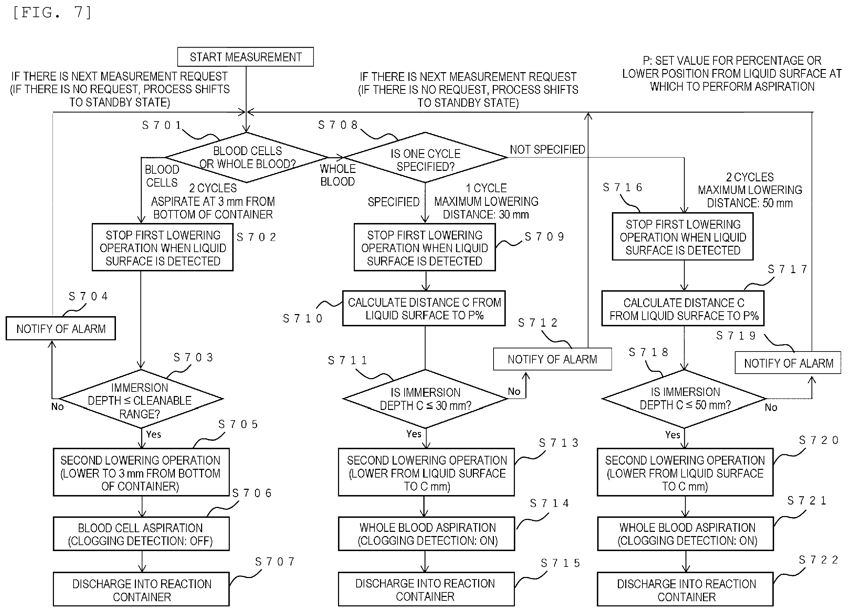

An automatic analyzer includes a sample dispensing mechanism for dispensing a sample, such as serum, plasma, whole blood, blood cells, or urine, from a sample container into a reaction container. For example, PTL 1 discloses that it takes more time in a blood cell collection step than in a serum collection step, and thus a blood cell sample dispensing mechanism requires twice as many cycles as the serum sample dispensing mechanism (paragraph 0045, FIG. 7, and the like).

### Citation List

### Patent Literature

PTL 1: JP2014-106166A

### Summary of Invention

### Technical Problem

In the technique disclosed in PTL 1, when a whole blood sample is dispensed, a sample dispensing mechanism similar to the blood cell sample dispensing mechanism is used, and it is considered that twice as many cycles are required as compared with a serum sample. However, regarding the whole blood sample, a probe does not need to be lowered to a bottom of a sample container, and thus a contamination range of the probe is narrow. Furthermore, whole blood has a lower viscosity than blood cells. Therefore, whole blood may be able to be aspirated as a sample in a shorter time than blood cells.

An object of the present invention is to provide an automatic analyzer and an automatic analysis method capable of shortening a measurement time when a sample is whole blood.

### Solution to Problem

In order to solve the above problem, the automatic analyzer of the present invention includes: a reaction disk which is rotated and stopped once per cycle; a sample dispensing mechanism configured to dispense a sample into reaction containers arranged on the reaction disk; and a control unit configured to control the reaction disk and the sample dispensing mechanism, and the control unit is configured to control the dispensing of the sample to be performed every two cycles when the sample is blood cells, and control the dispensing of the sample to be performed every cycle when the sample is whole blood.

In addition, the automatic analyzer of the present invention includes: a reaction disk which is rotated and stopped once per cycle; a sample dispensing mechanism configured to dispense a sample into reaction containers arranged on the reaction disk; and a control unit configured to control the reaction disk and the sample dispensing mechanism, and the control unit is configured to control the dispensing of the sample to be performed every two cycles when the sample is blood cells, and control the dispensing of the sample to be performed every cycle if a predetermined condition is satisfied, and control the dispensing of the sample to be performed every two cycles if the predetermined condition is not satisfied, when the sample is whole blood.

### Advantageous Effects of Invention

According to the present invention, it is possible to provide the automatic analyzer and the automatic analysis method capable of shortening the measurement time when the sample is whole blood.

### Brief Description of Drawings

[FIG. 1] FIG. 1 is a schematic diagram illustrating an overall configuration of an automatic analyzer.
[FIG. 2] FIG. 2 illustrates a tip position of a probe immersed in a sample in a sample container.
[FIG. 3] FIG. 3 is a flowchart illustrating a main operation from aspirating to discharging a sample in the automatic analyzer according to Example 1.
[FIG. 4] FIG. 4 is a time chart illustrating an operation of a sample dispensing mechanism when the sample is dispensed every two cycles.
[FIG. 5] FIG. 5 is a time chart illustrating an operation of the sample dispensing mechanism when the sample is dispensed every cycle.
[FIG. 6] FIG. 6 is an example of a measurement mode selection screen when a user measures a whole blood sample.
[FIG. 7] FIG. 7 is a flowchart illustrating a main operation from aspirating to discharging a sample in an automatic analyzer according to Example 2.
[FIG. 8] FIG. 8 is a flowchart illustrating a main operation from aspirating to discharging a sample in an automatic analyzer according to Example 3.
[FIG. 9] FIG. 9 is a flowchart illustrating a main operation from aspirating to discharging a sample in an automatic analyzer according to Example 4.
[FIG. 10] FIG. 10 is a flowchart illustrating a main operation from aspirating to discharging a sample in an automatic analyzer according to Example 5.
[FIG. 11] FIG. 11 is a view illustrating a plurality of representative aspects of the sample container and a liquid surface.

### Description of Embodiments

Hereinafter, embodiments of the present invention will be described with reference to the drawings.

### (Overall Configuration of Automatic Analyzer)

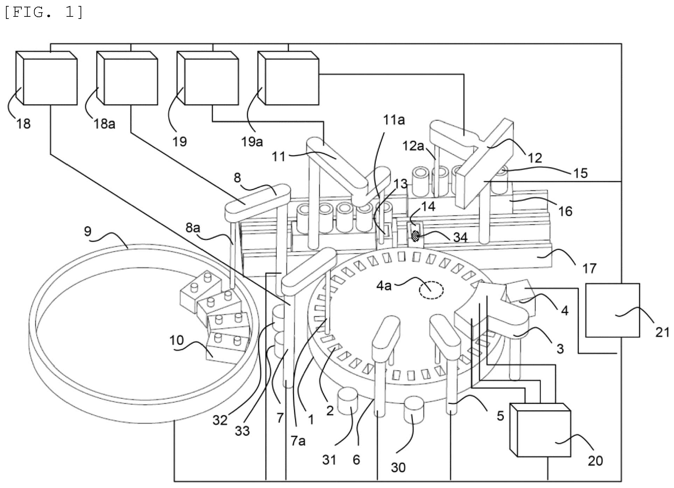

FIG. 1 is a schematic diagram illustrating an overall configuration of an automatic analyzer. The automatic analyzer of FIG. 1 is a device that dispenses and mixes a sample (specimen) and a reagent into a plurality of reaction containers 2, and measures the mixed liquid. The automatic analyzer includes a reaction disk 1, a sample transport mechanism 17, sample dispensing mechanisms 11 and 12, a reagent disk 9, reagent dispensing mechanisms 7 and 8, a cleaning mechanism 3, a light source 4a, a spectrophotometer 4, stirring mechanisms 5 and 6, cleaning tanks 13 and 14, 30, 31, 32, and 33, a drying tank 34, a control unit 21, and the like.

A plurality of reaction containers 2 are circumferentially arranged on an upper surface of the reaction disk 1. In addition, the reaction disk 1 repeats an operation of rotating by a rotation angle sufficient to pass through a predetermined number of reaction containers 2 and then stopping by a driving mechanism (not illustrated). Hereinafter, an operation until the reaction disk 1 rotates and stops is defined as one cycle. The sample transport mechanism 17 that causes a rack 16 on which sample containers 15 are placed to move is disposed near the reaction disk 1. The sample container 15 contains a sample such as blood, is placed on the rack 16, and is transported by the sample transport mechanism 17. In an operation in which a sample is managed by a barcode, a barcode is attached to the sample container 15, and the barcode includes measurement request item information, sample type information such as serum, whole blood, and blood cells, and the like. The information on the barcode is read by a barcode reader (not illustrated) during the transport by the sample transport mechanism 17.

The sample dispensing mechanisms 11 and 12 capable of rotational movement and vertical movement are disposed between the reaction disk 1 and the sample transport mechanism 17. The sample dispensing mechanisms 11 and 12 respectively include sample dispensing probes 11a and 12a to which sample syringes 19 and 19a are connected, and dispense the sample from the sample containers 15 into the reaction containers 2. The sample dispensing probe 11a is mainly used for dispensing a serum sample and aspirates the sample from a vicinity of a liquid surface, whereas the sample dispensing probe 12a is mainly used for dispensing a whole blood sample or a blood cell sample and aspirates the sample in a state of being immersed below a vicinity of a liquid surface.

The reagent disk 9 is kept cold, and can place a plurality of reagent bottles 10 circumferentially. The reagent dispensing mechanisms 7 and 8 capable of rotational movement and vertical movement are disposed between the reaction disk 1 and the reagent disk 9. The reagent dispensing mechanisms 7 and 8 respectively include reagent dispensing probes 7a and 8a to which reagent syringes 18 and 18a are connected, and dispense the reagent from the reagent bottles 10 into the reaction containers 2.

The cleaning mechanism 3, the stirring mechanisms 5 and 6, the light source 4a, the spectrophotometer 4, and the like are disposed around the reaction disk 1. The cleaning mechanism 3 is connected to a cleaning pump 20 and cleans the reaction container 2 after measurement. The stirring mechanisms 5 and 6 stir a mixed liquid (reaction solution) of the reagent and the sample in the reaction container 2. The light source 4a irradiates the mixed liquid (reaction solution) in the reaction container 2 with light, and the spectrophotometer measures, for example, absorbance of the emitted light. In addition, the cleaning tanks 13, 14, 33, 32, 31, and 30 are arranged in an operation range of the sample dispensing mechanisms 11 and 12, the reagent dispensing mechanisms 7 and 8, and the stirring mechanisms 5 and 6. Further, in order to dry the sample dispensing probe 12a to which a probe cleaner adheres in the cleaning tank 14, a drying tank 34 that vacuum-suctions the probe cleaner is disposed in the operation range of the sample dispensing mechanism 12.

The control unit 21 is connected to each of the mechanisms of the automatic analyzer and controls each of the mechanisms. Although not illustrated, the sample dispensing mechanisms 11 and 12 and the reagent dispensing mechanisms 7 and 8 also include a liquid surface detection sensor or a pressure sensor. Therefore, the control unit 21 can confirm the contact with the sample or the reagent by, for example, a sensor signal from the liquid surface detection sensor using a change in capacitance. In addition, the control unit 21 can determine whether the probe is clogged with the sample or the reagent based on a pressure value measured by the pressure sensor during aspiration of the sample or the reagent.

Hereinafter, a procedure of analysis processing in the automatic analyzer will be described. First, the control unit 21 dispenses the sample in the sample containers 15, which are placed on the rack 16 transported near the reaction disk 1 by the sample transport mechanism 17, into the reaction containers 2 on the reaction disk 1 by the sample dispensing mechanism 11 or the sample dispensing mechanism 12. Next, the control unit 21 causes the reagent dispensing mechanism 7 or the reagent dispensing mechanism 8 to dispense the reagent to be used in analysis from the reagent bottles 10 on the reagent disk 9 into the reaction containers 2 into which the sample has been previously dispensed.

Thereafter, the control unit 21 stirs the mixed liquid of the sample and the reagent by the stirring mechanism 5, causes light generated from the light source 4a to transmit to the reaction container 2 containing the mixed liquid, and measures a luminous intensity of the transmitted light by the spectrophotometer 4. The luminous intensity measured by the spectrophotometer 4 is transmitted to the control unit 21 via an A/D converter and an interface. The control unit 21 calculates, for example, a concentration of a predetermined component of an analysis item corresponding to the reagent based on absorbance of the mixed liquid, and outputs the calculation result to a display unit (not illustrated).

### (Type of Sample and Aspiration Position)

There are a plurality of types of samples dispensed by the sample dispensing mechanism, such as serum, plasma, whole blood, blood cells, and urine. Liquid properties differ depending on the type of sample. For example, regarding a viscosity mPa·S, the serum is 1.70 to 2.00, the plasma is 1.72 to 2.03, the whole blood is 4.40 to 4.74, and the blood cell is 60 or more. That is, when the sample is whole blood or blood cells, the viscosity is higher than when the sample is serum or plasma, and thus it is necessary to increase a time allocated to the aspiration in order to ensure a dispensing accuracy.

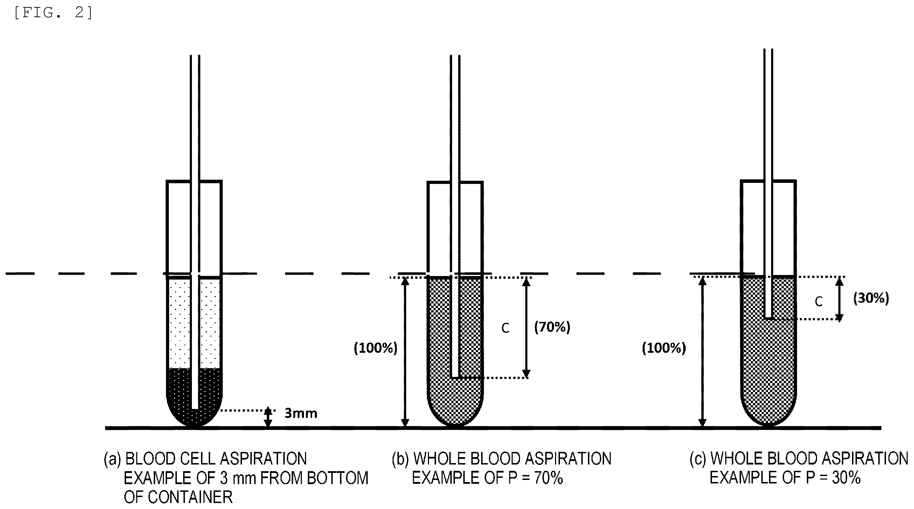

FIG. 2 is a diagram illustrating a tip position of a probe immersed in a sample in a sample container, in which (a) illustrates a case in which a blood cell sample is aspirated at a position 3 mm or upper from a bottom of the container, and (b) and (c) illustrate cases in which a whole blood sample is aspirated at a position P% or lower from a liquid surface. In addition, (b) illustrates a case in which the blood cell sample is aspirated at a position 70% or lower from the liquid surface, and (c) illustrates a case in which the blood cell sample is aspirated at a position 30% or lower from the liquid surface.

The blood cells are present in a vicinity of a bottom of the sample container in a blood sample subjected to a centrifuge processing.

Therefore, as illustrated in (a) of FIG. 2, the blood cell sample cannot be aspirated unless the tip of the probe is lowered to the vicinity of the bottom of the sample container (for example, 3 mm or upper from the bottom). As a result, in the aspiration of the blood cell sample, a distance in which the probe is immersed in the sample is longer than when the sample is serum or plasma, and thus a range in which the probe moves up and down during aspiration of the sample, a range in which the sample adhering in the probe is cleaned, and a range in which cleaning water is dried are all large. Furthermore, the blood cells have a viscosity of more than 60, and thus it also takes time to aspirate the blood cells by the probe. That is, when the blood cell sample is dispensed, it is difficult to complete a series of operations including sample aspiration, sample discharge, probe cleaning, and probe drying per cycle.

On the other hand, the whole blood sample contains an anticoagulant, and thus blood cell components naturally settle, creating a concentration gradient in the blood cell components. Therefore, in order to ensure a measurement accuracy of the whole blood sample, it is desirable to aspirate the sample at a position at which the probe is lowered to a certain depth or more (immersion depth C) from the liquid surface. For example, in (b) of FIG. 2, the probe is lowered from the liquid surface to a position 70% or lower, and the distance in which the probe is immersed in the sample is relatively long, but a movement range of the probe during aspiration of the sample, a cleaning range of the probe, and a drying range of the probe are all smaller than those of the blood cell sample. In (c) of FIG. 2, the probe is lowered only from the liquid surface to a position 30% or lower, and thus the movement range of the probe during aspiration of the sample, the cleaning range of the probe, and the drying range of the probe are relatively small. Furthermore, whole blood has a viscosity of 4.40 to 4.74, and thus the aspiration by the probe does not require as much time as the case of the blood cells. That is, when the whole blood sample is dispensed, the above series of operations can be completed per cycle, unlike when the blood cell sample is dispensed.

Hereinafter, a method of determining the number of cycles required for dispensing will be specifically described in Examples 1 to 6.

### [Example 1]

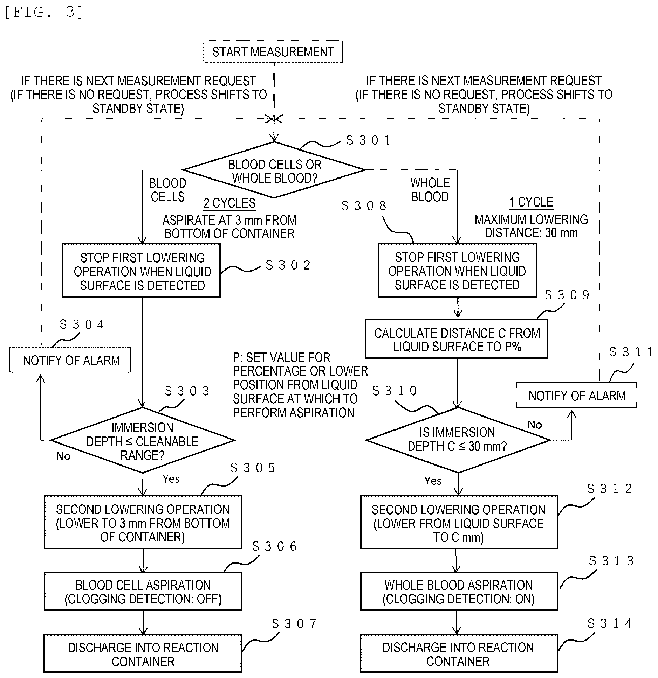

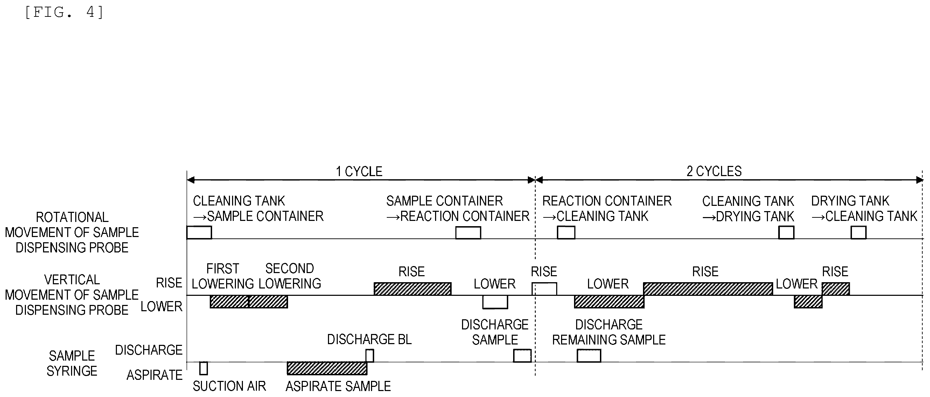

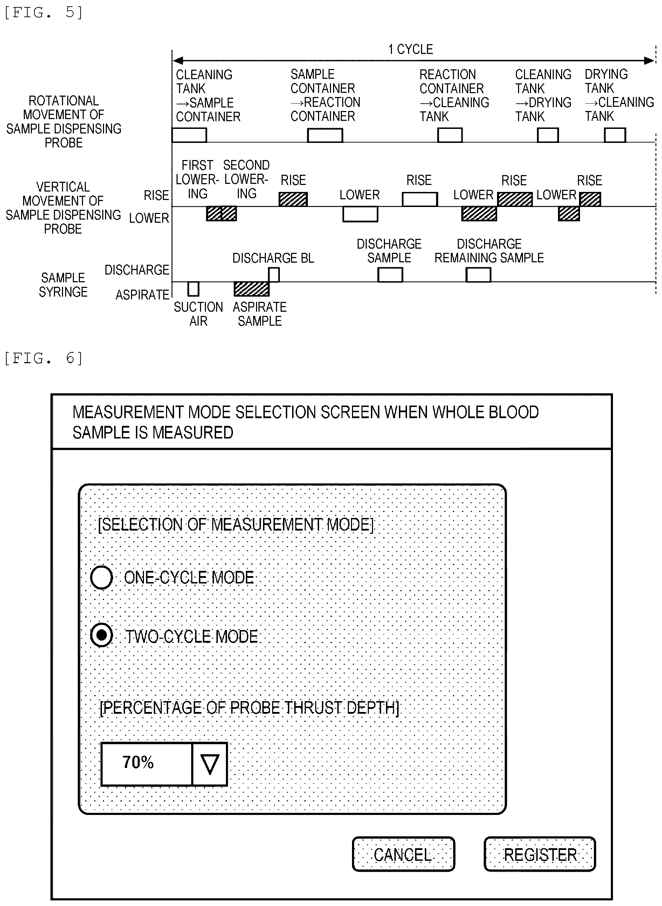

In Example 1, when the sample is blood cells, the sample is controlled to be dispensed every two cycles, and when the sample is whole blood, the sample is controlled to be dispensed every cycle. FIG. 3 is a flowchart illustrating a main operation from aspirating to discharging the sample in the automatic analyzer according to Example 1. FIG. 4 is a time chart illustrating an operation of the sample dispensing mechanism when the sample is dispensed every two cycles, and FIG. 5 is a time chart illustrating an operation of the sample dispensing mechanism when the sample is dispensed every cycle. As illustrated in FIG. 3, when the measurement is started, the control unit 21 determines whether the sample is blood cells or whole blood by a barcode or the like attached to the sample container 15 (step S301).

When it is determined that the sample is blood cells, the sample dispensing mechanism 12 operates according to the time chart illustrated in FIG. 4 because the sample is dispensed every two cycles. Specifically, first, the control unit 21 rotationally moves the sample dispensing probe 12a from above the cleaning tank 14 to above the sample container 15, and operates the sample syringe 19a to suction air in order to prevent the sample from being diluted by system water inside the probe. Next, the control unit 21 lowers the sample dispensing probe 12a, and stops a lowering operation (first lowering operation) of the sample dispensing probe 12a when the liquid surface detection sensor detects the liquid surface of the sample (step S302). Thereafter, the control unit 21 determines whether an immersion depth (distance from a position at which the liquid surface is detected to a position 3 mm or upper from a bottom of the sample container 15) is equal to or less than a cleanable range (for example, 50 mm) (step S303). When the immersion depth exceeds the cleanable range, the control unit 21 notifies a display unit or the like of an alarm (step S304), and does not perform a further lowering operation (second lowering operation to be described later) and an aspiration operation of the sample dispensing probe 12a. In this case, after the sample dispensing probe 12a is cleaned and dried, if there is a next measurement request, the process returns to step S301, and if there is no next measurement request, the process shifts to a standby state.

When it is determined in step S303 that the immersion depth is equal to or less than the cleanable range, the control unit 21 further lowers the sample dispensing probe 12a and stops the lowering operation (second lowering operation) at the position 3 mm or upper from the bottom of the sample container 15 (step S305). Next, the control unit 21 aspirates the sample by operating the sample syringe 19a (step S306). At this time, a clogging detection using the pressure sensor is OFF. This is because the blood cells have high viscosity and are less likely to be detected. Thereafter, the control unit 21 operates the sample syringe 19a to backlash-discharge a part of the sample into the sample container 15, and then raises the sample dispensing probe 12a. Further, the control unit 21 rotationally moves the sample dispensing probe 12a from above the sample container 15 to above the reaction container 2, then lowers the sample dispensing probe 12a into the reaction container 2, and operates the sample syringe 19a to discharge the sample into the reaction container 2 (step S307). The above is an operation of the sample dispensing mechanism in a first cycle.

Thereafter, the control unit 21 raises the sample dispensing probe 12a from the reaction container 2 and rotationally moves the sample dispensing probe 12a above the cleaning tank 14. The control unit 21 discharges the sample remaining inside the probe together with the system water by operating the sample syringe 19a while lowering the sample dispensing probe 12a in the cleaning tank 14. Further, the control unit 21 discharges internal cleaning water to clean an inside of the sample dispensing probe 12a or discharges external cleaning water to clean an outside of the sample dispensing probe 12a while lowering and raising the sample dispensing probe 12a in the cleaning tank 14.

When the cleaning of the sample dispensing probe 12a is completed, the control unit 21 rotationally moves the sample dispensing probe 12a above the drying tank 34 and then lowers the sample dispensing probe 12a. Further, after cleaning water on a surface of the sample dispensing probe 12a is removed by vacuum suction in the drying tank 34, the control unit 21 raises the sample dispensing probe 12a and rotationally moves the sample dispensing probe 12a above the cleaning tank 14. The above is an operation of the sample dispensing mechanism in a second cycle.

On the other hand, when it is determined in step S301 of FIG. 3 that the sample is whole blood, the sample dispensing mechanism 12 operates according to the time chart illustrated in FIG. 5 because the sample is dispensed every cycle. Specifically, first, the control unit 21 rotationally moves the sample dispensing probe 12a from above the cleaning tank 14 to above the sample container 15, and operates the sample syringe 19a to suction air. Next, the control unit 21 lowers the sample dispensing probe 12a, and stops the lowering operation (first lowering operation) of the sample dispensing probe 12a when the liquid surface detection sensor detects the liquid surface of the sample (step S308). Thereafter, the control unit 21 calculates a distance C from the liquid surface to a position P% or lower based on liquid surface height information detected by the liquid surface sensor and a predetermined set value (P) (step S309), and sets the distance C as the immersion depth C. Next, the control unit 21 determines whether the immersion depth C is equal to or less than a first threshold value (for example, 30 mm) (step S310). When the immersion depth C exceeds the first threshold value, it is also difficult to dispense the whole blood sample every cycle, and thus the control unit 21 notifies the display unit or the like of an alarm (step S311), and does not perform the second lowering operation and the aspiration operation of the sample dispensing probe 12a. In this case, after the sample dispensing probe 12a is cleaned and dried, if there is a next measurement request, the process returns to step S301, and if there is no next measurement request, the process shifts to the standby state.

When it is determined in step S310 that the immersion depth C is equal to or less than the first threshold value, the control unit 21 further lowers the sample dispensing probe 12a and stops the lowering operation (second lowering operation) at a position of the distance C from the liquid surface (step S312). Next, the control unit 21 aspirates the sample by operating the sample syringe 19a (step S313). At this time, the clogging detection using the pressure sensor is ON. This is because the whole blood has a lower viscosity than the blood cells and can be detected. Thereafter, the control unit 21 operates the sample syringe 19a to backlash-discharge a part of the sample into the sample container 15, and then raises the sample dispensing probe 12a. Further, the control unit 21 rotationally moves the sample dispensing probe 12a from above the sample container 15 to above the reaction container 2, then lowers the sample dispensing probe 12a into the reaction container 2, and operates the sample syringe 19a to discharge the sample into the reaction container 2 (step S314).

The subsequent operation is the same as the operation of the sample dispensing mechanism in the second cycle in FIG. 4. However, FIG. 5 is different from FIG. 4 in that the series of operations from sample aspiration to probe drying are completed per cycle. The operation indicated by hatching in FIGS. 4 and 5 can vary a required time.

According to Example 1, when the sample is whole blood, the sample can be dispensed every cycle, which leads to a reduction in measurement time. In Example 1, the second lowering operation is cancelled when the immersion depth C calculated based on the set value (P) or the like exceeds the first threshold value, but in this case, the immersion depth C may be corrected to the first threshold value or the like, and the second lowering operation may be executed. Further, the user may appropriately select whether to cancel the second lowering operation or to correct the immersion depth and execute the second lowering operation. Further, when the immersion depth is corrected, an alarm may be output to a measurement result.

### [Example 2]

In Example 2, the user can select whether to preferentially shorten the measurement time or to preferentially further improve the measurement accuracy and aspirate the sample at a more desirable immersion position.

FIG. 6 is an example of a measurement mode selection screen when the user measures a whole blood sample. A screen illustrated in FIG. 6 is output to the display unit before starting the measurement of the sample. Selectable measurement modes include a one-cycle mode and a two-cycle mode. When the one-cycle mode is selected, the automatic analyzer preferentially shortens the measurement time by dispensing the sample every cycle as much as possible. When the two-cycle mode is selected, the automatic analyzer preferentially further improves the measurement accuracy by dispensing the sample every two cycles as much as possible. It is assumed that the two-cycle mode is selected in an initial setting.

Further, on the screen illustrated in FIG. 6, the user can also set a percentage of the immersion depth at which the tip of the probe thrusts below the liquid surface during aspiration of the sample. For example, in FIG. 6, 70% is set as the set value (P) of the percentage of the immersion depth, and thus the sample is aspirated at a position 70% or lower from the liquid surface as the immersion depth. A range settable as the set value (P) is, for example, 50% to 70%. When a registration button is operated in a state in which a predetermined condition is selected in each item, the selected condition is stored in a memory in the control unit 21, and when a cancel button is operated, the selection is cancelled.

FIG. 7 is a flowchart illustrating a main operation from aspirating to discharging a sample in an automatic analyzer according to Example 2. As illustrated in FIG. 7, when the measurement is started, the control unit 21 determines whether the sample is blood cells or whole blood (step S701).

An operation (steps S702 to S707) when it is determined that the sample is blood cells is the same as that of Example 1 (steps S302 to S307).

When it is determined in step S701 that the sample is whole blood, the control unit 21 determines whether a one-cycle mode is specified by the user (step S708). When the one-cycle mode is specified, the sample dispensing mechanism 12 operates according to the time chart illustrated in FIG. 5 because the sample is dispensed every cycle. Subsequent steps S709 to S715 are the same as steps S308 to S314 in Example 1.

In step S708, when the one-cycle mode is not specified, that is, when a two-cycle mode is specified, the sample dispensing mechanism 12 operates according to the time chart illustrated in FIG. 4 because the sample is dispensed every two cycles. The operation in this case will be specifically described below.

First, the control unit 21 rotationally moves the sample dispensing probe 12a from above the cleaning tank 14 to above the sample container 15, and operates the sample syringe 19a to suction air. Next, the control unit 21 lowers the sample dispensing probe 12a, and stops the lowering operation (first lowering operation) of the sample dispensing probe 12a when the liquid surface detection sensor detects the liquid surface of the sample (step S716). Thereafter, the control unit 21 calculates the distance C from the liquid surface to the position P% or lower based on the liquid surface height information detected by the liquid surface sensor and the predetermined set value (P) (step S717), and sets the distance C as the immersion depth C. Next, the control unit 21 determines whether the immersion depth C is equal to or less than a second threshold value (for example, 50 mm) (step S718). When the immersion depth C exceeds the second threshold value, it is also difficult to dispense the sample every two cycles, and thus the control unit 21 notifies the display unit or the like of an alarm (step S719), and does not perform the second lowering operation and the aspiration operation of the sample dispensing probe 12a. In this case, after the sample dispensing probe 12a is cleaned and dried, if there is a next measurement request, the process returns to step S701, and if there is no next measurement request, the process shifts to the standby state.

When it is determined in step S718 that the immersion depth C is equal to or less than the second threshold value, the control unit 21 further lowers the sample dispensing probe 12a and stops the lowering operation (second lowering operation) at the position of the distance C from the liquid surface (step S720). Next, the control unit 21 aspirates the sample by operating the sample syringe 19a (step S721). Thereafter, the control unit 21 operates the sample syringe 19a to backlash-discharge a part of the sample into the sample container 15, and then raises the sample dispensing probe 12a. Further, the control unit 21 rotationally moves the sample dispensing probe 12a from above the sample container 15 to above the reaction container 2, then lowers the sample dispensing probe 12a into the reaction container 2, and operates the sample syringe 19a to discharge the sample into the reaction container 2 (step S722). The description of subsequent operations will be omitted.

### [Example 3]

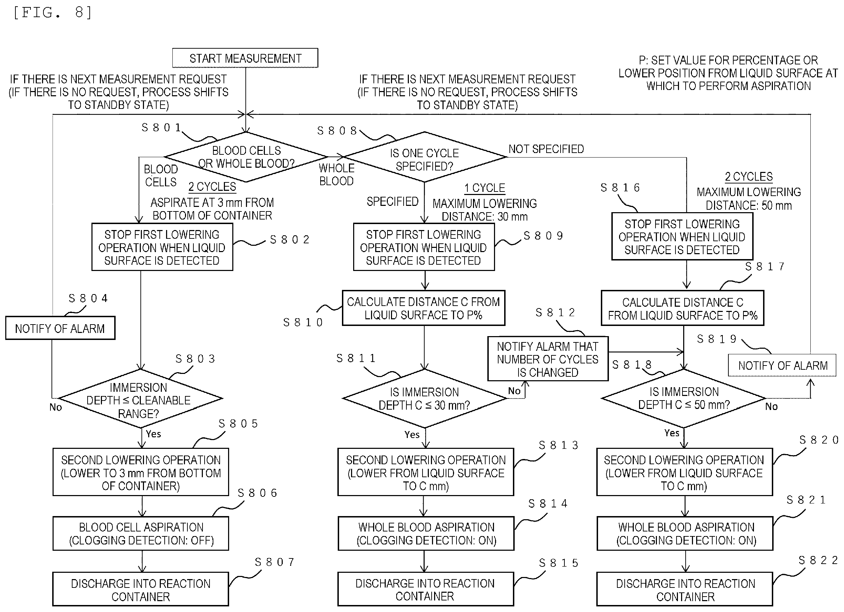

In Example 3, similarly to Example 2, the user can select the one-cycle mode or the two-cycle mode. However, Example 3 is different from Example 2 in that, when the one-cycle mode cannot be executed as selected by the user, a change to the two-cycle mode is attempted instead of notifying of the alarm. FIG. 8 is a flowchart illustrating a main operation from aspirating to discharging a sample in an automatic analyzer according to Example 3. Hereinafter, differences from Example 2 will be mainly described.

In Example 3, when the immersion depth C exceeds the first threshold value (for example, 30 mm) in step S811 corresponding to step S711 of Example 2, it is difficult to dispense the sample every cycle, and thus a change to dispensing the sample every two cycles is attempted. Therefore, the control unit 21 outputs an alarm to the display unit or the like to notify that the number of cycles is changed (step S812), and proceeds to step S818. In step S818, the control unit 21 determines whether the immersion depth C is equal to or less than the second threshold value (for example, 50 mm). When the immersion depth C also exceeds the second threshold value, it is also difficult to dispense the sample every two cycles, and thus the control unit 21 notifies the display unit or the like of an alarm (step S819), and does not perform the second lowering operation and the aspiration operation of the sample dispensing probe 12a. On the other hand, when the immersion depth C is equal to or less than the second threshold value, the sample can be dispensed every two cycles, and thus the control unit 21 performs the second lowering operation and the aspiration operation of the sample dispensing probe 12a.

According to Example 3, when the whole blood sample cannot be dispensed every cycle as selected by the user, a frequency of cancellation of dispensing itself can be reduced, which leads to a reduction in measurement time.

### [Example 4]

In Examples 2 and 3, when the immersion depth C calculated based on the set value (P) or the like exceeds a threshold value of each cycle mode (first threshold value in the case of the one-cycle mode and second threshold value in the case of the two-cycle mode), a cycle mode desired by the user is not executed, and an alarm is output. However, in Example 4, when the immersion depth C exceeds the threshold value of each cycle mode, the immersion depth is corrected to the threshold value of each cycle mode, and the cycle mode desired by the user is reliably executed.

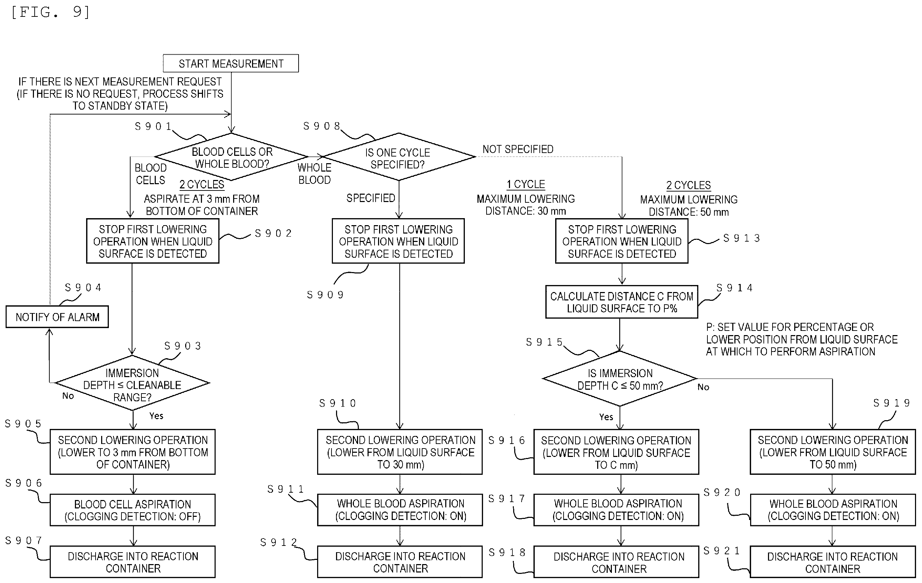

FIG. 9 is a flowchart illustrating a main operation from aspirating to discharging a sample in an automatic analyzer according to Example 4. Hereinafter, differences from Examples 2 and 3 will be mainly described.

In Example 4, when the one-cycle mode is specified, the sample dispensing probe 12a performs the first lowering operation until the liquid surface is detected, and then the sample dispensing probe 12a performs the second lowering operation from the liquid surface to the first threshold value (for example, 30 mm) or lower (step S910). By uniformly setting a lowering distance in step S910 to the first threshold value regardless of the predetermined set value (P), the immersion depth can be made as large as possible within a range in which the sample can be dispensed every cycle, and high measurement accuracy is maintained.

In Example 4, when the one-cycle mode is not specified, the sample dispensing probe 12a performs the first lowering operation until the liquid surface is detected, and then the distance C (immersion depth C) from the liquid surface to the position P% or lower is calculated based on the set value (P) or the like (step S914). Next, the control unit 21 determines whether the immersion depth C is equal to or less than the second threshold value (for example, 50 mm) (step S915). When the immersion depth C is equal to or less than the second threshold value, the sample dispensing probe 12a performs the second lowering operation from the liquid surface to the distance C or lower (step S916). On the other hand, when the immersion depth C exceeds the second threshold value, the sample dispensing probe 12a performs the second lowering operation from the liquid surface to the second threshold value or lower (step S919). Accordingly, the immersion depth can be made as large as possible within a range in which the sample can be dispensed without outputting an alarm, and the measurement accuracy is maintained. In Example 4, when the immersion depth C is equal to or less than the second threshold value, the sample dispensing probe 12a performs the second lowering operation from the liquid surface to the distance C or lower, but in this case, the sample dispensing probe 12a may perform the second lowering operation from the liquid surface to the second threshold value or lower.

According to Example 4, not only the whole blood sample can be dispensed every cycle as selected by the user, but also a frequency of outputting the alarm can be reduced.

### [Example 5]

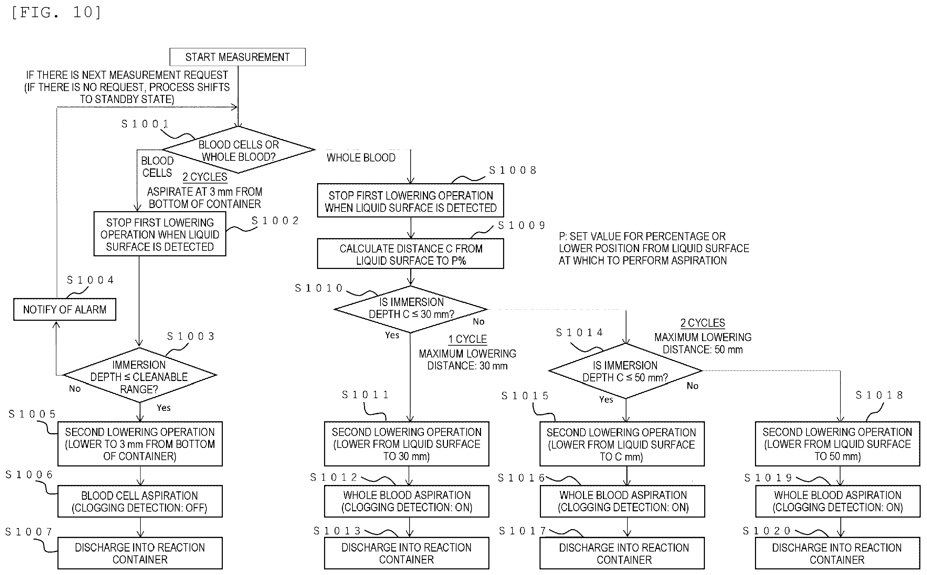

In Example 5, unlike Examples 2 to 4, the one-cycle mode or the two-cycle mode is not selected by the user, but is selected automatically by the automatic analyzer. FIG. 10 is a flowchart illustrating a main operation from aspirating to discharging a sample in an automatic analyzer according to Example 5. Hereinafter, differences from the other examples described above will be mainly described.

When the measurement is started, as in Examples 1 to 4, the control unit 21 determines whether the sample is blood cells or whole blood (step S1001). An operation (steps S1002 to S1007) when it is determined that the sample is blood cells is the same as that of Example 1 (steps S302 to S307) and the like.

When it is determined in step S1001 that the sample is whole blood, the sample dispensing probe 12a performs the first lowering operation until the liquid surface is detected, and then the distance C (immersion depth C) from the liquid surface to the position P% or lower is calculated based on the set value (P) or the like (step S1009). Next, the control unit 21 determines whether the immersion depth C is equal to or less than the first threshold value (for example, 30 mm) (step S1010). When the immersion depth C is equal to or less than the first threshold value, the sample dispensing probe 12a performs the second lowering operation from the liquid surface to the first threshold value (for example, 30 mm) or lower (step S1011). On the other hand, when the immersion depth C exceeds the first threshold value, the control unit 21 determines whether the immersion depth C is equal to or less than the second threshold value (for example, 50 mm) (step S1014). When the immersion depth C is equal to or less than the second threshold value, the sample dispensing probe 12a performs the second lowering operation from the liquid surface to the distance C or lower (step S1015). On the other hand, when the immersion depth C exceeds the second threshold value, the sample dispensing probe 12a performs the second lowering operation from the liquid surface to the second threshold value or lower (step S1019).

### [Example 6]

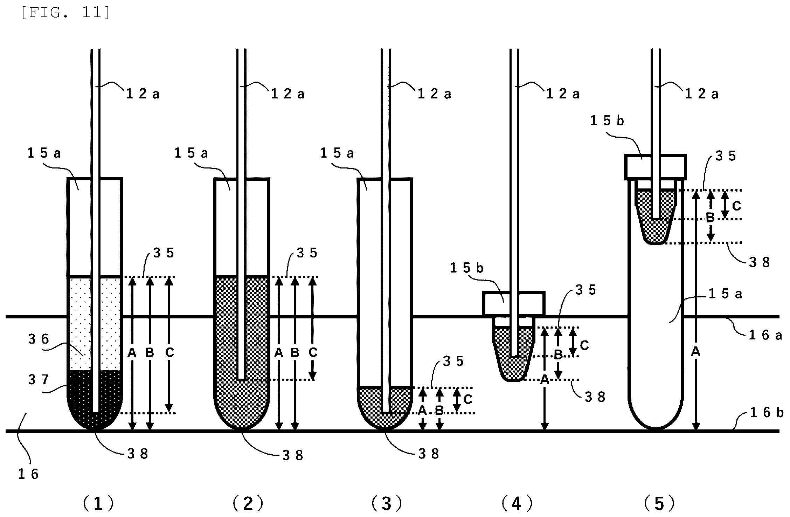

FIG. 11 is a view illustrating a plurality of representative aspects of the sample container and the liquid surface. In FIG. 11, a liquid surface height A is a length from a bottom 16b of the rack 16 to a liquid surface 35, and a liquid surface depth B is a length from a bottom 38 of the sample container 15 to the liquid surface 35. There are a plurality of types of sample containers 15, and there is a test tube-type sample container 15a arranged on the bottom 16b of the rack 16 as in Aspects (1) to (3) of FIG. 11, a cup-type sample container 15b as in Aspects (4) and (5) of FIG. 11, and the like. The type of the sample containers 15 is determined by a container detector (not illustrated) while the sample containers 15 are placed on the rack 16 and transported by the sample transport mechanism 17. Hereinafter, each aspect of FIG. 11 will be individually described.

Aspect (1) is a case in which the sample is blood cells. The sample container 15a containing the blood cell sample is separated into a serum portion 36 and a blood cell portion 37 by centrifugation, and then arranged on the bottom 16b of the rack 16. A range of the blood cell portion 37 corresponds to a percentage 30% to 50% of blood cell components in the blood. The liquid surface height A is usually about 30 mm to 80 mm and is equal to the liquid surface depth B.

Aspect (2) is a case in which the sample is whole blood. The sample container 15a containing a whole blood sample is a blood collection tube containing an anticoagulant, and is arranged at the bottom 16b of the rack 16. The liquid surface height A is usually about 30 mm to 80 mm and is equal to the liquid surface depth B.

In Aspect (3), the test tube-type sample container 15a contains only the whole blood sample or the blood cell sample after centrifugation in a necessary amount. The amount of sample is small, and thus the liquid surface height A is usually about 8 mm to 30 mm, and is equal to the liquid surface depth B.

In Aspect (4), the cup-type sample container 15b contains only the whole blood sample or the blood cell sample after centrifugation in a necessary amount. Although the amount of sample is small, the sample container 15b is arranged on the upper surface 16a of the rack 16, and thus the liquid surface height A is usually about 30 mm to 50 mm and is larger than the liquid surface depth B.

In Aspect (5), the cup-type sample container 15b also contains only the whole blood sample or the blood cell sample after centrifugation in a necessary amount. Although the amount of sample is small, the sample container 15b is arranged on an upper surface of the sample container 15a, and thus the liquid surface height A is usually about 70 mm to 100 mm and is larger than the liquid surface depth B. This aspect is relatively often used in the operation in which the sample is managed by a barcode, and the sample container 15a can be reused by attaching a barcode.

The immersion depth C is a length from a tip of the sample dispensing probe 12a to the liquid surface 35. The immersion depth C is calculated based on the liquid surface depth B and the set value (P) predetermined for the percentage of the immersion depth. The liquid surface depth B is calculated based on information (for example, the liquid surface height A) detected by the liquid surface detection sensor and information on the type of the sample containers determined by the container detector. A distance obtained by adding a few mm to the immersion depth C corresponds to the cleaning range and the drying range of the sample dispensing probe 12a. A magnitude relation between the cleaning range and the drying range in each aspect described above is basically (1) ≥ (2) > (3) ≥ (4) = (5) .

Here, in Examples 1 to 5 described above, as illustrated in Aspects (1) and (2) of FIG. 11, it is assumed that a sample having a liquid surface depth B of about 30 mm to 80 mm is contained. Therefore, in Examples 1 to 3 and 5, if the immersion depth C calculated based on the set value (P) or the like satisfies a condition of being equal to or less than the first threshold value (for example, 30 mm), in Example 4, if the immersion depth C satisfies a condition of specifying the one-cycle mode, the whole blood sample is dispensed every cycle. However, when only a small amount of whole blood sample having a liquid surface depth B of about 8 mm to 30 mm is contained, even if these conditions are satisfied, it may be difficult to dispense the sample every cycle. Specifically, when the liquid surface height A is less than a third threshold value (for example, 10 mm), it takes time to move the sample dispensing probe 12a up and down, and thus it is difficult to dispense the sample every cycle. Hereinafter, each type of sample container illustrated in Aspects (3) to (5) of FIG. 11 will be described.

As illustrated in Aspect (3) of FIG. 11, in the test tube-type sample container 15a, the liquid surface height A = the liquid surface depth B. Therefore, if the liquid surface depth B is 10 mm or more, the liquid surface height A is 10 mm or more, that is, the third threshold value or more, and the sample may be dispensed every cycle. However, if the liquid surface depth B is less than 10 mm, the liquid surface height A is also less than 10 mm, that is, less than the third threshold value, and it is difficult to dispense the sample every cycle.

As illustrated in Aspects (4) and (5) of FIG. 11, in the cup-type sample container 15b, the liquid surface height A > the liquid surface depth B. Therefore, if the liquid surface depth B is less than 10 mm, the liquid surface height A is 10 mm or more, that is, the third threshold value or more, and the sample may be dispensed every cycle.

The present invention is not limited to the examples described above, and includes various modifications. Further, a part of a configuration of a certain example can also be replaced with a configuration of another example, and the configuration of another example can also be added to the configuration of a certain example. A part of a configuration in each example may be added to, deleted from, or replaced with another configuration.

### Reference Signs List

1: reaction disk
2: reaction container
3: cleaning mechanism
4: spectrophotometer
4a: light source
5, 6: stirring mechanism
7, 8: reagent dispensing mechanism
7a, 8a: reagent dispensing probe
9: reagent disk
10: reagent bottle
11, 12: sample dispensing mechanism
11a, 12a: sample dispensing probe
13, 14, 30, 31, 32, 33: cleaning tank
15: sample container
15a: (test tube-type) sample container
15b: (cup-type) sample container
16: rack
16a: upper surface (of rack)
16b: bottom (of rack)
17: sample transport mechanism
18, 18a: reagent syringe
19, 19a: sample syringe
20: cleaning pump
21: control unit
34: drying tank
35: liquid surface
36: serum portion
37: blood cell portion
38: bottom (of sample container)

## Claims

1. An automatic analyzer comprising:
a reaction disk on which a plurality of reaction containers are circumferentially arranged and which is rotated and stopped once per cycle;
a sample dispensing mechanism configured to dispense a sample into the reaction containers arranged on the reaction disk; and
a control unit configured to control the reaction disk and the sample dispensing mechanism, wherein
the control unit is configured to
control the dispensing of the sample to be performed every two cycles when the sample is blood cells, and
control the dispensing of the sample to be performed every cycle when the sample is whole blood.

2. The automatic analyzer according to claim 1, wherein
the sample dispensing mechanism includes a probe that aspirates and discharges the sample, and
when the sample is blood cells, a cleaning range of the probe is larger than when the sample is whole blood.

3. An automatic analyzer comprising:
a reaction disk on which a plurality of reaction containers are circumferentially arranged and which is rotated and stopped once per cycle;
a sample dispensing mechanism configured to dispense a sample into the reaction containers arranged on the reaction disk; and
a control unit configured to control the reaction disk and the sample dispensing mechanism, wherein
the control unit is configured to
control the dispensing of the sample to be performed every two cycles when the sample is blood cells, and
control the dispensing of the sample to be performed every cycle if a predetermined condition is satisfied, and control the dispensing of the sample to be performed every two cycles if the predetermined condition is not satisfied, when the sample is whole blood.

4. The automatic analyzer according to claim 3, wherein
the predetermined condition is that one cycle is specified by a user.

5. The automatic analyzer according to claim 4, wherein
the sample dispensing mechanism includes a probe that aspirates and discharges the sample, and a liquid surface detection sensor that detects a liquid surface of the sample, and
even if one cycle is specified by a user,
the sample is not dispensed every cycle when an immersion depth at which a tip of the probe thrusts below the liquid surface during aspiration of the sample exceeds a first threshold value.

6. The automatic analyzer according to claim 5, wherein
the sample is dispensed every two cycles when the immersion depth exceeds the first threshold value and is equal to or less than a second threshold value, and
the dispensing of the sample is cancelled when the immersion depth exceeds the second threshold value.

7. The automatic analyzer according to claim 5, wherein
the immersion depth is calculated based on information detected by the liquid surface detection sensor and information set in advance as a percentage at which the tip of the probe thrusts below the liquid surface.

8. The automatic analyzer according to claim 3, wherein
the sample dispensing mechanism includes a probe that aspirates and discharges the sample, and
when the sample is whole blood and the control unit controls the dispensing of the sample to be performed every cycle,
the sample is aspirated in a state in which a tip of the probe thrusts below a liquid surface to a first threshold value or lower, regardless of information set in advance as a percentage at which the tip of the probe thrusts below the liquid surface.

9. The automatic analyzer according to claim 3, wherein
the sample dispensing mechanism includes a probe that aspirates and discharges the sample, and a liquid surface detection sensor that detects a liquid surface of the sample, and
whether the predetermined condition is satisfied is determined based on at least information detected by the liquid surface detection sensor and information set in advance as a depth at which a tip of the probe thrusts below the liquid surface during aspiration of the sample.

10. The automatic analyzer according to claim 3, wherein
the sample dispensing mechanism includes a probe that aspirates and discharges the sample, and a liquid surface detection sensor that detects a liquid surface of the sample, and
the predetermined condition is satisfied when an immersion depth at which a tip of the probe thrusts below the liquid surface during aspiration of the sample is equal to or less than a first threshold value.

11. The automatic analyzer according to claim 10, wherein
even when the immersion depth is equal to or less than the first threshold value,
the predetermined condition is not satisfied when a liquid surface height detected by the liquid surface detection sensor is less than a third threshold value.

12. An automatic analysis method using an automatic analyzer,
the automatic analyzer including:
a reaction disk on which a plurality of reaction containers are circumferentially arranged and which is rotated and stopped once per cycle;
a sample dispensing mechanism configured to dispense a sample into the reaction containers arranged on the reaction disk; and
a control unit configured to control the reaction disk and the sample dispensing mechanism,
the automatic analysis method comprising:
by the control unit,
controlling the dispensing of the sample to be performed every two cycles when the sample is blood cells; and
controlling the dispensing of the sample to be performed every cycle when the sample is whole blood.

13. An automatic analysis method using an automatic analyzer,
the automatic analyzer including:
a reaction disk on which a plurality of reaction containers are circumferentially arranged and which is rotated and stopped once per cycle;
a sample dispensing mechanism configured to dispense a sample into the reaction containers arranged on the reaction disk; and
a control unit configured to control the reaction disk and the sample dispensing mechanism,
the automatic analysis method comprising:
by the control unit,
controlling the dispensing of the sample to be performed every two cycles when the sample is blood cells; and
controlling the dispensing of the sample to be performed every cycle if a predetermined condition is satisfied, and controlling the sample such that a process from aspiration to discharging is performed every two cycles if the predetermined condition is not satisfied, when the sample is whole blood.
